Europäisches Patentamt

European Patent Office

Office européen des brevets

(19)

(11) Veröffentlichungsnummer: **0 205 182**
**B1**

(12) **EUROPÄISCHE PATENTSCHRIFT**

(45) Veröffentlichungstag der Patentschrift: **02.05.90**

(51) Int. Cl.⁵: **H 04 B 3/14**

(21) Anmeldenummer: **86108073.7**

(22) Anmeldetag: **12.06.86**

(54) **Mindestens einen Laufzeit-Fixpunkt aufweisender, verlustbehafteter, einstellbarer Laufzeitentzerrer.**

(30) Priorität: **12.06.85 DE 3521073**

(43) Veröffentlichungstag der Anmeldung:
**17.12.86 Patentblatt 86/51**

(45) Bekanntmachung des Hinweises auf die
Patenterteilung:
**02.05.90 Patentblatt 90/18**

(84) Benannte Vertragsstaaten:
**AT BE CH DE FR GB IT LI NL SE**

(56) Entgegenhaltungen:
**FR-A-2 407 609**
**GB-A- 836 096**
**US-A-2 304 545**

**FREQUENZ, Band 38, Nr. 3, 1984, Seiten 54-62, Berlin, DE; G. PFITZENMAIER: "Ein Beitrag zur Realisierung einstellbarer Laufzeitentzerrer mit Fixpunkten"**

(73) Patentinhaber: **Siemens Aktiengesellschaft**
**Wittelsbacherplatz 2**
**D-8000 München 2 (DE)**

(72) Erfinder: **Pfitzenmaier, Gerhard, Dr.-Ing.**
**Eschenrieder Strasse 21**
**D-8038 Gröbenzell (DE)**

Courier Press, Leamington Spa, England.

**Beschreibung**

Die Erfindung betrifft einen einstellbaren Laufzeitentzerrer gemäß dem Oberbegriff des Patentanspruches 1.

Zur Optimierung von Nachtrichtenübertragungssystemen werden Laufzeitentzerrer mit stetig oder stufig einstellbarer Laufzeitcharakteristik benötigt, die bei einer vorgegebenen Referenzfrequenz einen einstellungsunabhängigen Fixpunkt der Laufzeit aufweisen und deren Betriebsdämpfung im vorgesehenen Frequenzbereich nicht von den Einstellungen des Entzerrers abhängt und möglichst konstant ist.

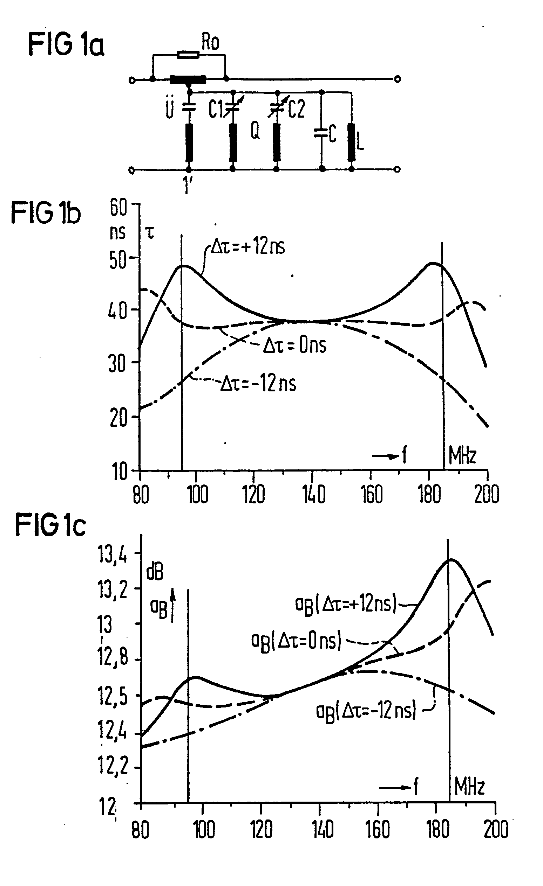

Während die bekkannt gewordenen Realisierungsformen derartiger einstellbarer Laufzeitentzerrer (Frequenz 38 (1984), Heft 2, S. 30 bis 60) z.B. in der vorteilhaften Darlington-Schaltung (z.B. Fig. 1a) im verlustlosen Fall eine laufzeiteinstellungsunabhängige Betriebsdämpfung von $a_B$ = 6.02 dB = const. gewährleisten, treten in der Praxis — verursacht durch die endlichen Güten der Bauelemente — frequenzabhängige Verläufe der Betriebsdämpfung auf, die in unerwünschter Weise von den Einstellungen des Laufzeitentzerrers abhängen, wie dies später in Fig. 1c am Beispiel eines einstellbaren Laufzeit-Parabel-Entzerrers (Frequenz 38 (1984), Heft 3, S. 54 bis 62) gezeigt ist. Durch die spezielle Art der Bemessung des Laufzeitentzerrers ist jedoch gewährleistet, daß bei der vorgegebenen Referenzfrequenz auch ein einstellungsunabhängiger Fixpunkt der Betriebsdämpfung auftritt.

Diesem Stand der Technik entsprechend wird zum einstellbaren, verlustbehafteten Laufzeitentzerrer ein einstellbarer Dämpfungsentzerrer in Kette geschaltet, der so bemessen ist un synchron zu der Laufzeiteinstellungen so gesteurt wird, daß die Dämpfungssummenkurve der beiden Netzwerke bei allen Laufzeiteinstellung im Rahmen der zulässigen Toleranzen den gleichen frequenzabhängigen Verlauf aufweist.

Dieser einstellbare Dämpfungsentzerrer verursacht wegen des erforderlichen Bauteile- und Abgleichaufwandes und wegen seines Platzbedarfes zusätliche Kosten und bringt elektrische Nachteile in Form einer relativ hohen Grunddämpfung und einer frequenzabhängigen Laufzeit mit sich. Die Dimensionsionierung des einstellbaren Dämpfungsentzerrers wird durch den Zwang eingeschränkt, daß bei der Referenzfrequenz ein einstellungsunabhängiger Dämfungswert auftreten muß.

Andererseits ist in einer älteren Anmeldung (EP—A—186 806, veröffentlicht 9.7.86) bereits vorgeschlagen worden, eine Dämpfungshubkompensation dadurch zu erreichen, daß die Güten der kapazitätsgesteuerten Serienschwingkreise des Laufzeitentzerrers durch die Variation von ohmschen Widerständen in Abhängigkeit von den Laufzeiteinstellungen nachgeregelt werden. Bei diesem Verfahren ist es somit nötig, verschiedenartige Schaltelemente des Laufzeitentzerrers — also z.B. Kondensatoren und ohmische Widerstände — veränderbar auszuführen. In vielerlei Anwendungsfällen erscheint es dagegen vorteilhaft, wenn die Steuerung des Entzerrers bezüglich Laufzeiteinstellung und Dämpfungshubkompensation einheitlich mit nur einer Art von Schaltelementen — z.B. ausschließlich Kondensatoren — erfolgen kann.

Aufgabe der Erfindung ist es deshalb, Schaltungen für einen einstellbaren Laufzeitentzerrer mit kapazitiv gesteuerter Dämpfungshubkompensation anzugeben, bei denen die Steuerung des Entzerrers hinsichtlich der Laufzeiteinstellung und hinsichtlich des Dämpfungshubes ausschließlich mit einstellbaren Kondensatoren vorgenommen werden kann.

Ausgehend von einer Entzerrerschaltung gemäß dem Oberbegriff des Patentanspruches 1, wird diese Aufgabe gemäß der Erfindung nach den kennzeichnenden Merkmalen des Patentanspruches 1 gelöst.

Vorteilhafte Ausgestaltungen sind im Patentanspruch 2 angegeben.

Es erfolgt also bei der Erfindung der laufzeiteinstellungsabhängige Dämpfungsausgleich praktisch ohne wesentliche Änderung der Laufzeitcharakteristik im verlustbehafteten, einstellbaren Laufzeitentzerrer selbt. Ziel dieser Maßnahmen ist es somit, die den verschiedenen Laufzeiteinstellungen entsprechenden ursprünglichen Dämpfungskurven jeweils in die niveaumäßig höchste Dämpfungskurve überzuführen. Der Kompensationseffekt wird durch die Änderung des Realteils der erfindungsgemäß vorgesehenen Impedanz bei deren kapazitätsgesteuerter Nachregelung bewirkt.

Ein besonderer Vorteil der Erfindung liegt darin, daß sowohl die Laufzeiteinstellung als auch die Dämpfungshubkompensation im Entzerrer einheitlich durch technisch gut realisierbare Kondensatoren mit veränderbarem Kapazitätswert bzw. durch Kapazitätsdioden bewirkt werden. Weiterhin bleibt in vorteilhafter Weise bei der erfindungsgemäßen Dämpfungsnachsteuerung im einstellbaren Laufzeitentzerrer der Fixpunkt der Dämpfung erhalten, so tritt keine zusätzliche Grunddämpfung auf, die ursprünglichen Laufzeitkurven erfahren im Rahmen der zulässigen Toleranzen keine Veränderung und der erforderliche Schaltungsaufwand ist minimal.

Anhand von Ausführungsbeispielen wird nachstehend die Erfindung noch näher erläutert.

Es zeigen in der Zeichnung

Fig. 1a eine Darlington-Schaltung eines einstellbaren Laufzeit-Parabel-Entzerrers; die Einstellbarkeit der Laufzeitkurven wird durch die Steuerung der Kapazität zweier Serienschwingkreiskondensatoren C1 und C2 erreicht,

Fig. 1b Laufzeitkurven für die Gruppenlaufzeit $\tau$ eines einstellbaren Laufzeit-Parabel-Entzerrers mit Auslenkungen von $\Delta\tau$ = + 12 ns, $\Delta\tau$ = 0 ns, $\Delta\tau$ = − 12 ns bei den Bereichs-Randfrequenzen f= 95 MHz und f = 185 MHz,

Fig. 1c den Laufzeitkurven in Fig. 1a entsprechende Dämpfungskurven des verlustbehafteten (Q) Laufzeit-Parabel-Entzerrers (Fig. 1a) ohne erfindungsgemäße Kompensation,

Fig. 2 eine erfindungsgemäße Parallelschaltung einer kapazitätsgesteuerten Impedanz I zur verlustbehafteten Reaktanz (Q) des einstellbaren Laufzeit-Parabel-Entzerrers,

Fig. 3a ein Ausführungsbeispiel eines dämpfungshubkompensierten und ausschließlich kapazitiv gesteuerten einstellbaren Laufzeit-Parabel-Entzerrers gemäß der Erfindung bei dem die Impedanz I nur aus der Serienschaltung eines ohmschen Widerstandes R3 und eines einstellbaren Kondensators C3 besteht,

Fig. 3b aus der erfindungsgemäßen Schaltung nach Fig. 3a berechnete, den Laufzeitauslenkungen $\Delta\tau = -12$ ns, $\Delta\tau = 0$ ns, $\Delta\tau = +12$ ns (Fig. 1b) entsprechende Dämpfungsverläufe des einstellbaren Laufzeit-Parabel-Entzerrers, wobei der bis auf einen geringen Restfehler identische Verlauf dieser drei Dämpfungskurven im direkten Vergleich mit den in Fig. 1c gezeigten unkompensierten Kurven — bei gleichem Laufzeitverhalten — die Wirksamkeit der Erfindung erkennen läßt.

Im Ausführungsbeispiel von Fig. 1a ist eine z.B. aus der o.g. Literaturstelle Frequenz *38* bekannte Darlington-Schaltung verwendet, die aus einem Übertrager Ü besteht, dem ein überbrückender Widerstand Ro zugeordnet ist. Am Anzapfungspunkt des im Längsweig liegenden Übertragers Ü liegen im Querzweig Reaktanzzweige, die mit 1', 1, 2, L und C bezeichnet sind. Im Ausführungsbeispiel bestehen diese Reaktanzzweige aus Serinresonanzkreisen mit einer Spule und einem Kondensator. Als einzelne weitere Reaktanzelemente sind die Spule L und der Kondensator C zu erkennen. Di Einstellbarkeit der Laufzeit erfolgt mit Hilfe der einstellbaren Kondensatoren C1 und C2 in den Reaktanzzweigen 1 und 2. Den Verlusten in den Reaktanzzweigen 1 und 2 wird mit dem Symbol Q die sogenannte Güte zugeordnet, durch deren Wirkung bekanntlich Störungen im Übertragungsverhalten des Laufzeitentzerrers auftreten.

In Fig. 1b ist die Gruppenlaufzeit $\tau$ in Abhängigkeit von der Frequenz f dargestellt, in Fig. 1c ist die Betriebsdämpfung $a_B$ in Abhängigkeit von der Frequenz f aufgetragen und zwar jeweils für einen beispielsweisen Frequenzbereich von 95 bis 185 MHz. Die Fig. 1c läßt dabei erkennen, daß noch keinerlei Kompensation für die verlustbehafteten (Q) Laufzeit-Parabel-Entzerrer gemäß Fig. 1a vorgenommen wurde.

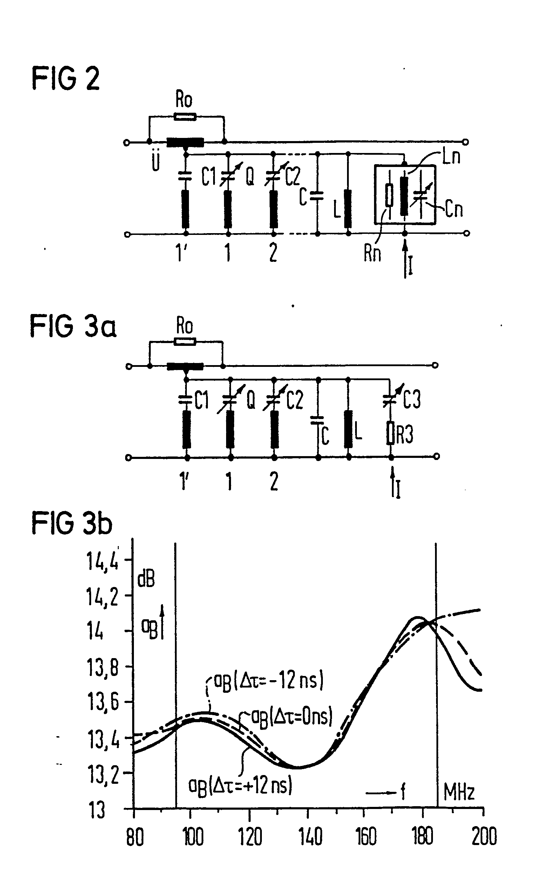

Fig. 2 läßt nun erkennen, daß dort der Reaktanz des Entzerrers nach Fig. 1a eine weitere allgemeine Impedanz I parallelgeschaltet ist, deren einzelne Schaltelemente dort symbolisch mit den Bezugshinweisen Rn, Ln und Cn bezeichnet sind. Es wird dort also parallel zur verlustbehafteten (Q), kapazitätsgesteuerten Reaktanz C1, C2 die zugeschaltete Impedanz I hinsichtlich ihrer Schaltungsstruktur und ihrer Elementewerte so gewählt, daß ihr komplexer Eingangswiderstand (hervorgerufen durch die Zusammenschaltung von Widerständen Rn, von Spulen Ln und von Kondensatoren Cn) z.B. durch nur einen Kondensator C3 (vergleiche Fig. 3a) oder auch durch mehrere Kondensatoren Cn mit veränderbarer Kapazität laufzeiteinstellungsabhängig so geregelt wird, daß der Betriebsdämpfungsverlauf $a_B$ des Entzerrers nahezu unabhängig von dem Laufzeiteinstellungen $\Delta\tau$ ist. Kondensatoren mit veränderbarer Kapazität können, dabei in an sich bekannter Weise als gesteuerte Kapazitätsdioden realisiert werden.

Im Ausführungsbeispiel von Fig. 3a ist die Impedanz I mit nur zwei Schaltelementen, nämlich der Serienschaltung aus einem Widerstand R3 und einem einstellbaren Kondensator C3, realisiert.

Fig. 3b zeigt unmittelbar die Wirkung dieser Kompensation, die nach Fig. 3a vorgenommen wurde. Es sind dabei die Betriebsdämpfungskurven bei Laufzeitauslenkungen von $\Delta\tau = -12$ ns, $\Delta\tau = 0$ ns und $\Delta\tau = +12$ ns zu erkennen.

Als Anwendungsbeispiel wird also vorstehend die Schaltung (Fig. 1a) eines einstellnbaren Laufzeit-Parabel-Entzerrers nach der eingangs zitierten Literaturstelle Frequenz 38 (1984) 3, S. 54—62 angegeben, die im Frequenzbereich f = 95 ... 185 MHz die Erzeugung von quadratischen Lauftzeitparabeln mit dem Hub $\Delta\tau = \pm 12$ ns bei den Randfrequenzen erlaubt. In Fig. 1b sind die aus der verlustbehafteten Schaltung berechneten Laufzeitkurven für $\Delta\tau + 12$ ns, $\Delta\tau = 0$ ns und $\Delta\tau = -12$ ns und in Fig. 1c die diesen Einstellungen zugeordneten Dämpfungskurven $a_B$ angegeben. Es ist zu erkennen, daß der maximale Dämpfungshub bei der unteren Randfrequenz $\Delta a \approx 0.3$ dB und bei der oberen Randfrequenz $\Delta a \approx 0.74$ dB beträgt. Die parallel zur verlustbehafteten Reaktanz 1,2 des Laufzeitentzerrers geschaltete Impedanz I besteht beim vorliegenden Anwendungsbeispiel gemäß Fig. 3a lediglich aus der Serienschaltung eines ohmschen Widerstandes R3 und eines einstellbaren Kondensators C3, dessen Kapazität von der gewählten Laufzeiteinstellung abhängt.

Durch diese zusätzliche Steuerung der erfindungsgemäß vorgesehenen Impedanz I gehen — wie Fig. 3b zeigt — die niveaumäßig unteren Dämpfungskurven jeweils wenigstens näherungsweise in die niveauhöchste, der Laufzeiteinstellung $\Delta\tau = +12$ ns entsprechende Dämpfungskurve über, womit die Abhängigkeit der Dämpfungskurven von den Laufzeiteinstellungen weitgehend eliminiert ist, Die allen Laufzeiteinstellungen gemeinsame, niveaumäßig oberste Dämpfungskurve kann in konventioneller Weise durch Nachschalten eines fest abgestimmten Dämpfungsentzerrers zu einer frequenzkonstanten Dämpfung ergänzt werden.

**Patentansprüche**

1. Mindestens einen Laufzeit-Fixpunkt aufweisender, verlustbehafteter, einstellbarer Laufzeitentzerrer, der insbesondere als Darlingtonschaltung aus einem Übertrager (Ü), einem Widerstand (Ro) sowie aus laufzeitbestimmenden Reaktanzzweigen (1',1, 2, L, C,) besteht, dadurch gekennzeichnet, daß parallel zur verlustbehafteten (Q), kapazitätsgesteuerten (C1, C2) Reaktanz (1, 2) des einstellbaren Laufzeitentzerrers eine Impedanz (I) geschaltet ist, die nach Struktur und Elementewerten so gewählt ist, daß ihr komplexer Widerstand (Rn, Lv, Cn) durch einen (C3) oder mehrere Kondensatoren (Cn) mit veränderbarer Kapazität laufzeiteinstellungsabhängig so geregelt wird, daß der Betriebsdämpfungsverlauf ($a_B$) des Entzerrers nahezu unabhängig von den Laufzeiteinstellungen ($\Delta\tau$) ist.

2. Entzerrer nach Anspruch 1, dadurch gekennzeichnet, daß Kondensatoren veränderbarer Kapazität als Kapazitätsdioden realisiert sind.

**Revendications**

1. Correcteur réglable du temps de propagation, affecté de pertes, qui comporte au moins un point fixe du temps de propagation et est constitué notamment sous la forme d'un montage de Darlington incluant un transformateur (Ü), une résistance (Re) ainsi que des branches équipées de réactances (1', 1, 2, L, C) déterminant le temps de propagation, caractérisé par le fait qu'en parallèle avec la réactance (1, 2), qui est affectée d'une perte (Q) et qui est commandée par des capacités (C1, C2), du correcteur réglable du temps de propagation est branchée une impédance (I), qui est choisie en fonction de la structure et des valeurs des éléments de telle sorte que sa résistance complexe (Rn, Ln, Cn) est réglée, en fonction du réglage du temps de propagation, par un condensateur (C3) ou par plusieurs condensateurs (Cn) possédant une capacité variable, de telle sorte que l'allure ($a_B$) de l'affaiblissement composite du correcteur est presque indépendante des réglages ($\Delta\tau$) du temps de propagation.

2. Correcteur suivant la revendication 1, caractérisé par le fait que des condensateurs à capacité variable sont réalisés sous la forme de diodes capacitives.

**Claims**

1. A lossy, adjustable delay equalizer having at least one fixed transit time point, which delay equalizer, particularly as a Darlington circuit, consists of a transformer (Ü), a resistor (Ro) and transit time-determining reactance arms (1', 1, 2, L, C), characterised in that, parallel to the lossy (Q), capacitance controlled (C1, C2) reactance (1, 2) of the adjustable delay equalizer, an impedance (I) is connected which is selected according to its structure and element values, in such a way that its complex resistance (Rn, Ln, Cn) is controlled by one (C3) or more capacitors (Cn) with variable capacitance in dependence on the delay setting, in such a way that the operating continuation curve ($A_B$) of the equalizer is nearly independent of the delay settings ($\Delta\tau$).

2. Equalizer according to Claim 1, characterized in that capacitors of variable capacitance are realized as tuning diodes.

## FIG 1a

## FIG 1b

## FIG 1c

# FIG 2

# FIG 3a

# FIG 3b